Europäisches Patentamt

**European Patent Office**

**Office européen des brevets**

(11) Numéro de publication : **0 109 874**
**B1**

(12) # FASCICULE DE BREVET EUROPÉEN

(45) Date de publication du fascicule du brevet :
01.10.86

(51) Int. Cl.⁴ : **F 01 D 25/16**, F 01 D 5/06,
F 16 C 27/04

(21) Numéro de dépôt : **83402056.2**

(22) Date de dépôt : **24.10.83**

(54) **Montage d'un palier inter-arbres de turbomachine multi-corps.**

(30) Priorité : **10.11.82 FR 8218863**

(43) Date de publication de la demande :
**30.05.84 Bulletin 84/22**

(45) Mention de la délivrance du brevet :
**01.10.86 Bulletin 86/40**

(84) Etats contractants désignés :
**DE FR GB**

(56) Documents cités :
EP-A- 0 042 320
BE-A- 435 519
FR-A- 2 295 297
GB-A- 581 879
GB-A- 778 300
US-A- 2 657 084
US-A- 4 302 062
US-A- 4 304 522

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bouiller, Jean Georges**
**10, rue Kleber**
**F-91800 Brunoy (FR)**
Inventeur : **Soligny, Marcel Robert**
**136, boulevard Jean Mermoz**
**F-94150 Chevilly-Larue (FR)**

(74) Mandataire : **Moinat, François**
**S.N.E.C.M.A. Service des Brevets Boîte Postale 81**
**F-91003 Evry Cedex (FR)**

### Description

La présente invention concerne un palier inter-arbres pour une turbomachine multi-corps.

Comme il est connu, par exemple par EP-A-0 042 320 (correspondant à la demande de brevet français 80.13116), les turbomachines du type multi-corps comportent un palier qui supporte en rotation un premier arbre par rapport à un second arbre et ce palier comprend un roulement à rouleaux insérés entre une bague intérieure montée directement sur le premier arbre et une bague extérieure contenue dans un boîtier lui-même monté sur le second arbre. Dans l'application décrite par la demande citée ci-dessus, le premier arbre placé du côté intérieur est constitué par un tourillon de la ligne d'arbre du corps haute pression et le second arbre placé du côté extérieur est constitué par un tourillon de la ligne d'arbre du corps basse pression.

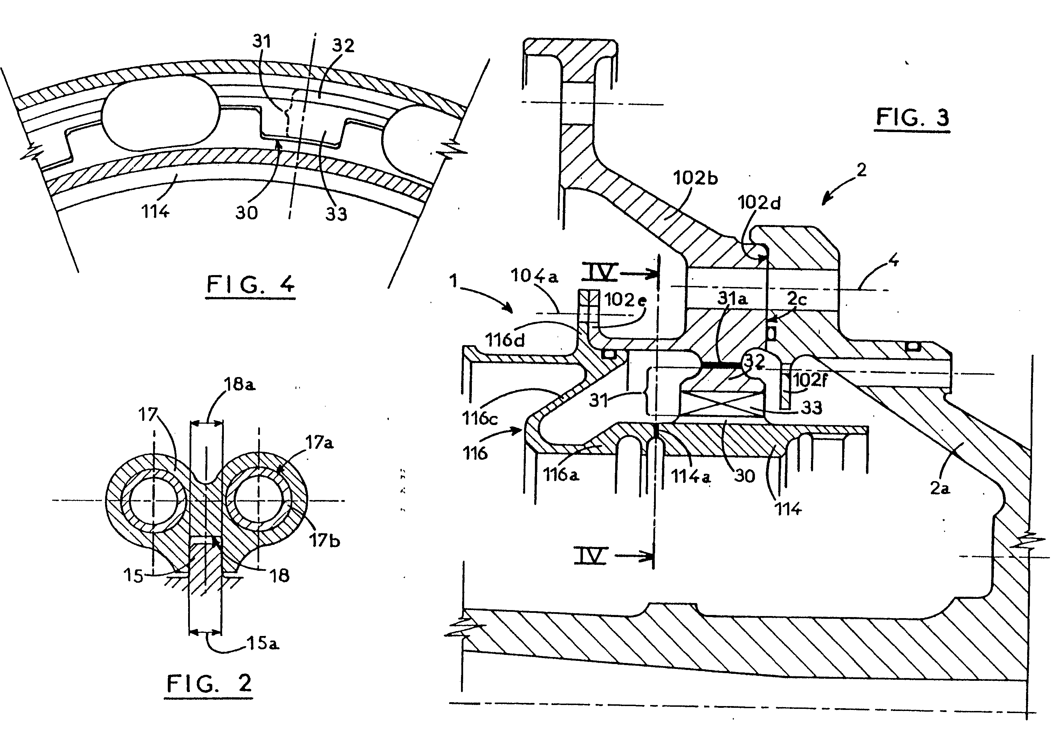

Dans ces paliers inter-arbres en fonctionnement, des dilatations d'origine mécanique par effet centrifuge et des dilatations d'origine thermique provoquent des jeux, en particulier des jeux radiaux dans le roulement dont les conséquences sont néfastes. Il en résulte ainsi des vibrations préjudiciables à la tenue du palier. La demande précitée, en adoptant une configuration dite « inversée » dans laquelle le tourillon basse pression vient coiffer le tourillon haute pression et supporte la piste extérieure du roulement de grand diamètre qui se trouve ainsi liée à un élément de structure dont la température et la vitesse de rotation sont moins élevées, améliore les résultats obtenus en réduisant les dilatations susceptibles de créer des jeux radiaux. Des solutions d'amortissement des vibrations par pellicule d'huile ont été adjointes. Par ailleurs, US-A-4 304 522 décrit une turbomachine avec deux arbres concentriques, chacun étant supporté par un roulement dont la bague extérieure est montée dans une bague-support. La bague-support est portée par des pièces de révolution radialement élastiques qui sont reliées aux parois définissant le conduit de gaz, de sorte que les déformations et les dilatations radiales des parois ne provoquent pas un déplacement des bagues extérieures des roulements, ni l'apparition de jeux radiaux dans les roulements. BE-A-435 519 décrit une disposition de jonction du disque d'une turbine avec un arbre, dans laquelle le disque est relié avec l'arbre au moyen d'un organe radialement élastique et le disque et l'arbre sont pourvus de « cliquets » pour transmettre le couple (voir figure 4).

Ces deux dispositions cependant ne concernent pas les paliers inter-arbres et, toutefois, malgré ces précautions, dans les turbomachines modernes, en particulier les turboréacteurs multi-flux à forte poussée, la recherche des hautes performances et l'utilisation de grands diamètres rendent ces dispositions antérieures insuffisantes pour éviter les dilatations et déformations du tourillon basse pression et éviter l'apparition dans le roulement de jeux radiaux préjudiciables à la tenue en service du palier et susceptibles d'avoir des répercussions néfastes sur les conditions de fonctionnement dynamique du rotor et sur les performances aérothermiques de la turbomachine. La présente invention vise à améliorer un palier inter-arbres de turbomachine, de manière à éviter ces inconvénients.

Dans ce but, un palier inter-arbres de turbomachine multi-corps du type décrit ci-dessus et conforme à l'invention est caractérisé en ce que la bague-support de la bague extérieure du roulement comporte sur son diamètre externe un premier élément de cannelures coopérant suivant un ajustement précis et sans jeu obtenu par apairage avec un second élément de cannelures appartenant à une pièce intermédiaire fixée sur le premier arbre et en ce que ladite bague-support est maintenue axialement par une pièce de révolution radialement élastique qui est reliée audit premier arbre. Au moyen de cette disposition, les déformations et les dilatations radiales du tourillon basse pression entraînent un déplacement relatif radial des éléments de cannelures sans provoquer de déplacement de la bague extérieure du roulement, évitant ainsi l'apparition de jeux radiaux dans le roulement, évitant en conséquence une création de balourds sur les corps tournants et assurant de bonnes conditions de fonctionnement dynamique du rotor avec le respect des jeux minimaux en bout d'aubes de rotor permettant un bon niveau des performances aérothermiques de la turbomachine.

Selon un premier mode de réalisation de l'invention, la bague-support comporte de manière avantageuse sur son diamètre externe un nombre N de dents régulièrement espacées constituant le premier élément de cannelures et coopère avec un nombre N de pièces du type jumelles dont la partie centrale de liaison comporte une cannelure constituant le second élément de cannelures et dont la largeur est apairée à l'épaisseur d'une desdites dents correspondantes, lesdites jumelles étant fixées par vis et écrous sur une face radiale du tourillon basse-pression.

Avantageusement encore, la pièce de révolution radialement élastique assure le maintien axial de la bague-support du côté aval, défini par rapport au sens normal de circulation des gaz dans la turbomachine, et comporte une bride radiale s'intercalant entre la face radiale du tourillon basse pression et les jumelles et formant avec une bride radiale axialement espacée d'une pièce de retenue-amont un logement torique desdites jumelles, l'ensemble desdites pièces, pièce de retenue-amont, jumelles et bride radiale de ladite pièce de révolution étant fixé par vis et écrous sur la face radiale du tourillon basse pression.

Selon un second mode de réalisation de l'invention, la bague-support comporte sur son diamètre externe un nombre N' de cannelures longitudinales constituant le premier élément de cannelures et coopère avec un nombre N' d'éléments constitués d'une base cylindrique et d'une dent dont le profil est apairé pour chacune à une cannelure de la bague-support, lesdits éléments appartenant ou étant fixés par soudure au diamètre interne d'une virole elle-même fixée par vis et écrous sur une face radiale du tourillon basse pression.

Selon ce dernier mode et avantageusement, la pièce de révolution radialement élastique est soudée d'un côté sur la face amont de la bague-support, l'amont étant défini par rapport au sens normal de circulation des gaz de la turbomachine, et est fixée de l'autre côté par vis et écrous sur une bride radiale de ladite virole.

D'autres caractéristiques et avantages de l'invention seront mieux compris à la lecture de la description qui va suivre des modes de réalisation de l'invention et en se référant aux dessins annexés sur lesquels :

la figure 1 est une demi-vue en coupe axiale de la partie d'une turbomachine multi-corps comprenant le montage de palier suivant un premier mode de réalisation de l'invention,

la figure 2 est une vue partielle en section dans un plan transversal à l'axe longitudinal de la turbomachine selon la ligne II-II de la figure 1,

la figure 3 est une demi-vue analogue à la figure 1 en coupe axiale de la partie d'une turbomachine multicorps comprenant le montage de palier selon un second mode de réalisation de l'invention,

la figure 4 est une vue partielle en coupe dans un plan transversal à l'axe longitudinal de la turbomachine d'un montage de palier selon la ligne IV-IV de la figure 3.

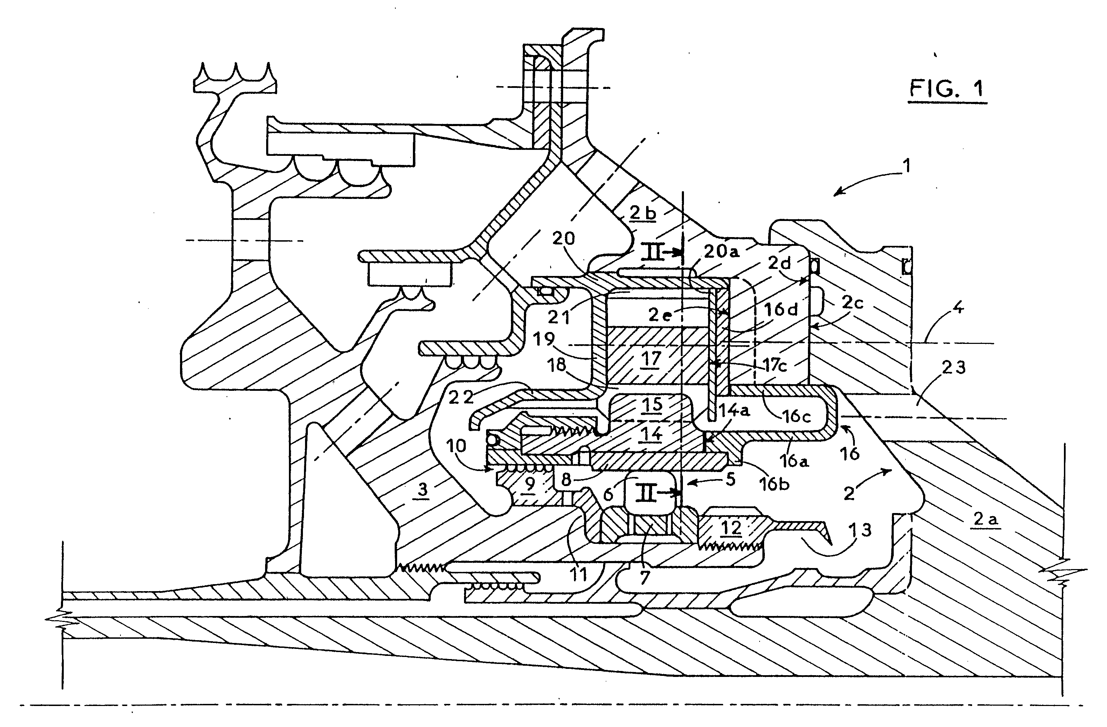

A la figure 1, on a représenté en coupe axiale une partie d'une turbomachine multi-corps comportant un montage de palier désigné par la référence générale 1 et conforme à un premier mode de réalisation de l'invention. Ce palier 1 est disposé entre un premier arbre 2 qui est le tourillon de la ligne d'arbre du corps basse pression et un second arbre 3 qui est le tourillon de la ligne d'arbre du corps haute pression. Dans le cas particulier représenté à la figure 1, le tourillon basse pression est constitué du tourillon proprement dit 2a prolongé à son extrémité par une virole 2b dirigée vers l'avant. Ces deux parties 2a et 2b sont assemblées par boulonnage réunissant deux faces radiales respectives 2c et 2d selon l'axe 4 de la fixation. Le tourillon basse pression 2, et particulièrement sa virole 2b, coiffe l'extrémité du tourillon haute pression 3. Le palier 1 comprend un roulement 5 dont les rouleaux 6 sont insérés entre une bague intérieure 7 et une bague extérieure 8. La bague intérieure 7 est montée directement sur le tourillon haute pression 3 sur lequel sa position axiale est déterminée, d'une part, côté amont par un anneau porte-léchettes 9 formant le joint d'étanchéité à labyrinthe 10 entre les deux corps tournants et en appui sur un épaulement 11 du tourillon haute pression 3 et, d'autre part, côté aval par un écrou annulaire 12 comportant à son extrémité aval un logement annulaire 13 recevant l'huile destinée au graissage et au refroidissement du roulement 5. La bague extérieure 8 de roulement est montée sur une bague-support 14. Cette bague-support 14 présente des caractéristiques qui font l'objet de la présente invention. D'une part, la bague-support 14 comporte sur son diamètre externe un nombre N de dents 15 régulièrement espacées qui sont réalisées à la manière de dents de cannelures. D'autre part, la bague-support 14 est maintenue axialement côté aval par une pièce de révolution 16 en forme d'épingle. Dans le mode de réalisation représenté au dessin, l'extrémité de la première branche 16a située du côté intérieur de l'épingle 16 est soudée, par exemple par faisceau d'électrons, sur la face d'extrémité aval 14a de la bague-support 14. Cette branche 16a de l'épingle 16 comporte également un rebord radial interne 16b qui forme une butée de maintien axial côté aval de la bague extérieure 8 de roulement. La seconde branche 16c située du côté extérieur de l'épingle 16 est prolongée par une bride radiale 16d en appui sur une face radiale 2e de la virole 2b du tourillon basse pression 2. On notera que cette épingle 16 est susceptible de déformations élastiques en particulier dans la direction radiale perpendiculaire aux deux branches 16a et 16c de l'épingle 16. Sur le diamètre externe de la bague-support 14 sont disposées un nombre N de pièces 17 du type jumelles dont chacune peut s'inscrire dans le volume théorique d'un prisme triangulaire droit. Une de ces pièces 17 est représentée à la figure 2 en section selon un plan transversal perpendiculaire à l'axe longitudinal de la turbomachine. Les deux parties de la jumelle 17 comportent chacune un alésage 17a dans lequel est placée par frettage une douille 17b. Une des arêtes théoriques du prisme est remplacée par une cannelure 18 dont la largeur 18a est apairée à l'épaisseur 15a d'une dent 15 de la bague-support 14. Cet apairage permet un ajustement sans jeu entre les dents 15 et les cannelures 18 et en particulier en éliminant l'incidence des tolérances de fabrication des éléments. Côté amont, une bride radiale 19 d'une pièce annulaire de retenue 20 forme avec la bride radiale 16d de l'épingle 16 un logement torique 21 dans lequel sont logées les jumelles 17 maintenues axialement entre les deux brides 19 et 16d. Un même assemblage par vis et écrous d'axe 4 réunit les deux parties 2a et 2b du tourillon basse pression 2, la bride radiale 16d de l'épingle 16, une des N jumelles 17 et la bride radiale 19 de la pièce de retenue 20. La pièce de retenue 20 comporte également une bride axiale annulaire 22 sur laquelle se forme par centrifugation un anneau d'huile à partir duquel sont assurés le graissage et le refroidissement des dents 15 dans les cannelures 18. Côté aval, une cale intermédiaire 20a placée entre la bride 16d de l'épingle 16, d'une part, et la face coopérante 17c des jumelles 17 constitue l'enceinte de lubrification des dents 15 et des cannelures 18.

Le retour de l'huile vers les enceintes de récupération après graissage et refroidissement du palier 1 s'effectue par des perçages 23 du tourillon basse-pression 2.

Le montage de palier qui vient d'être décrit permet de désolidariser totalement la bague-support et par conséquent la bague extérieure du roulement qui lui est liée du tourillon basse-pression. En effet, en cas de déformations du tourillon et de dilatations radiales d'origines mécaniques ou thermiques diverses, le déplacement radial entre les dents 15 et les cannelures 18 permet à la bague-support 14 de rester parfaitement centrée en conservant par conséquent la concentricité des deux corps tournants.

De la même façon, ces résultats sont également obtenus selon l'invention dans un second mode de réalisation représenté aux figures 3 et 4. Dans ce second mode, à la figure 3 on a représenté en coupe axiale suivant l'axe longitudinal de la turbomachine et de manière analogue à la figure 1 une partie d'une turbomachine multi-corps comportant un montage de palier désigné par la référence générale 1 et conforme à ce second mode de réalisation de l'invention. Dans un but de simplification, les pièces qui se déduisent directement de la représentation donnée à la figure 1 n'ont pas été reproduites sur cette figure 3 et il en est ainsi en particulier pour le tourillon haute-pression 3, pour le roulement 5 avec les rouleaux 6, sa bague intérieure 7 et sa bague extérieure 8 ou pour les pièces associées, l'écrou annulaire 12, l'anneau porte-léchettes 9. On retrouve également sur cette figure 3 le tourillon basse-pression 2 et en particulier la partie 2a du tourillon proprement dit. Les pièces utilisées dans ce second mode de réalisation qui présentent une similitude de fonction avec des pièces utilisées dans le premier mode ont reçu le même repère, augmenté d'une centaine. La bague-support 114 à l'intérieur de laquelle est montée la bague extérieure 8 de roulement comporte maintenant sur son diamètre externe des cannelures longitudinales 30 qui dans l'exemple représenté aux dessins, et comme on le voit en particulier sur la figure 4, sont au nombre de douze. Cette bague-support 114 est maintenue axialement par une pièce de révolution .116 en forme d'épingle, de manière similaire au premier mode de réalisation mais, dans ce second mode, l'épingle 116 est placée du côté amont. L'extrémité de la première branche 116a située du côté intérieur de l'épingle 116 est soudée, par exemple par faisceau d'électrons, sur la face d'extrémité amont 114a de la bague-support 114. La seconde branche 116c située du côté extérieur de l'épingle 116 est prolongée par une bride radiale 116d en appui sur une bride radiale 102e rattachée à la virole 102b du tourillon basse-pression 2. Les brides radiales 116d et 102e sont assemblées par vis et écrou d'axe 104a. Les deux parties 2a et 102b du tourillon basse-pression sont assemblées par un boulonnage d'axe 4 réunissant leurs deux faces radiales respectives 2c et 102d. Sur son diamètre interne, la virole 102b comporte des éléments 31 qui sont au nombre de douze dans l'exemple représenté à la figure 4 et constitués d'une base cylindrique 32 et d'une dent 33. Chaque élément 31 peut être réuni au diamètre intérieur de la virole 102b par une soudure 31a, par exemple par faisceau d'électrons. Comme dans le premier mode de réalisation, le profil de chacune des douze dents 33 est apairé par un ajustement précis sans jeu à celui d'une cannelure 30 de la bague-support 114. Le graissage et le refroidissement des dents et cannelures sont assurés à partir d'un anneau d'huile formé entre la face radiale 102d de la virole 102b du tourillon basse-pression 2 et une bride radiale 102f de sa partie 2a. Ce second mode de réalisation permet d'obtenir les mêmes résultats avantageux que le premier mode. Il peut procurer dans certaines applications des facilités supplémentaires dans la réalisation de l'assemblage.

**Revendications**

1. Palier de turbomachine multi-corps du type supportant en rotation et de façon concentrique un premier arbre intérieur (2) et un second arbre extérieur (3) le premier arbre (2) étant le tourillon de la ligne d'arbre du corps basse-pression, le second arbre (3) étant le tourillon de la ligne d'arbre du corps haute-pression ledit palier comprenant un roulement (5) dont les rouleaux (6) sont insérés entre une bague intérieure (7) montée directement sur le second arbre (3) et une bague extérieure (8) montée dans une bague-support (14 ; 114) portée par le premier arbre (2), la position relative des deux arbres (2, 3) étant inversée au niveau du palier, le second arbre (3) étant radialement intérieur et la partie coopérante (2a, 2b) du premier arbre (2) étant radialement extérieure, caractérisé en ce que ladite bague-support (14 ; 114) comporte, sur son diamètre externe, un premier élément de cannelure (15 ; 30) coopérant, suivant un ajustement précis et sans jeu obtenu par apairage, avec un second élément de cannelure (18 ; 33) appartenant à une pièce intermédiaire (17 ; 31) fixée sur le premier arbre (2) et en ce que ladite bague-support (14 ; 114) est maintenue axialement par une pièce de révolution (16 ; 116) radialement élastique qui est reliée audit premier arbre (2), de sorte que les déformations et les dilatations radiales du tourillon basse-pression (2) entraînent un déplacement relatif radial des éléments de cannelures (15, 18 ; 30, 33) sans provoquer de déplacement de la bague extérieure (8) du roulement ni l'apparition de jeux radiaux dans le roulement (5).

2. Palier inter-arbres de turbomachine multi-corps selon la revendication 1 caractérisé en ce que la bague-support (14) comporte sur son diamètre externe un nombre N de dents (15) régulièrement espacées constituant le premier élément de cannelures et coopère avec un nombre N de pièces du type jumelles (17) dont la partie centrale de liaison comporte une cannelure (18) constituant le second élément de cannelures et dont la largeur est apairée à l'épaisseur d'une (15) desdites dents correspondantes, lesdites jumelles étant fixées par vis et écrous sur une face radiale (2e) du tourillon basse-pression (2).

3. Palier inter-arbres de turbomachine multi-corps selon la revendication 2 caractérisé en ce que la pièce de révolution (16) radialement élastique assure le maintien axial de la bague-support (14) du côté aval, défini par rapport au sens normal de circulation des gaz dans la turbomachine, et comporte une bride radiale (16d) s'intercalant entre la face radiale (2e) du tourillon basse-pression (2) et les jumelles (17) et formant avec une bride radiale (19) axialement espacée d'une pièce de retenue-amont (20) un logement torique (21) desdites jumelles (17), l'ensemble desdites pièces, pièce de retenue-amont (20), jumelles (17) et bride radiale (16d) de ladite pièce de révolution (16) étant fixé par vis et écrous sur la face radiale (2e) du tourillon basse-pression (2).

4. Palier inter-arbres de turbomachine multi-corps selon la revendication 1, caractérisé en ce que la bague-support (114) comporte sur son diamètre externe un nombre N' de cannelures longitudinales (30) constituant le premier élément de cannelures et coopère avec un nombre N' d'éléments (31) constitués d'une base cylindrique (32) et d'une dent (33) constituant le second élément de cannelures et dont le profil est apairé pour chacune à une cannelure (30) de la bague-support (114), lesdits éléments (31) appartenant ou étant fixés par une soudure (31a) au diamètre interne d'une virole (102b) elle-même fixée par vis et écrous sur une face radiale (2c) du tourillon basse-pression (2).

5. Palier inter-arbres de turbomachine multi-corps selon la revendication 4 caractérisé en ce que la pièce de révolution (116) radialement élastique est soudée d'un côté sur la face amont (114a) de la bague-support (114), l'amont étant défini par rapport au sens normal de circulation des gaz de la turbomachine, et est fixée de l'autre côté par vis et écrous sur une bride radiale (102e) de ladite virole (102b).

**Claims**

1. Multi-spool turbomachine bearing assembly of the type supporting for rotation and in a concentric manner a first, inner shaft (2) and a second, outer, shaft (3) the first shaft (2) being the rotary assembly of the low pressure shaft line, the second shaft (3) being the rotary assembly of the high pressure shaft line, the said bearing assembly comprising a roller bearing (5) of which the rollers (6) are inserted between an inner race (7) mounted directly on the second shaft (3) and an outer race (8) mounted in a race housing (14 ; 114) carried by the first shaft (2), the relative position of the two shafts (2, 3) being inverted in the bearing assembly zone, the second shaft (3) being the radially inner and the cooperating part (2a, 2b) of the first shaft (2) being the radially outer, characterized in that the said race housing (14 ; 114) comprises, at its outer diameter, a first grooved element (15 ; 30) cooperating, after precise adjustment and without clearance obtained by pairing, with a second grooved element (18 ; 33) belonging to an intermediate part (17 ; 31) secured on the first shaft (2) and that the said race housing (14 ; 114) is held axially by a radially resilient body of revolution (16 ; 116) which is connected to the said first shaft (2), so that the deformations and the radial expansions of the low pressure rotary assembly (2) give rise to relative radial displacement of the grooved elements (15, 18 ; 30, 33) without causing displacement of the outer race (8) of the roller bearing or the production of radial clearances within the roller bearing (5).

2. Inter-shaft multi-spool turbomachine bearing assembly according to claim 1 characterized in that the race housing (14) comprises at its outer diameter a number N of teeth (15) which are regularly distributed and constituting the first element of the grooves and cooperate with a number N of twinned type parts (17) of which the connecting central part comprises grooves (18) constituting the second grooved element and of which the width is matched to the thickness of one (15) of the said corresponding teeth, the said twinned parts being secured by nuts and bolts on a radial face (2e) of the low pressure rotary assembly (2).

3. Inter-shaft multi-spool turbomachine bearing assembly to claim 2 characterized in this that the radially body of revolution (16) provides for holding axially the race housing (14) from the downstream side, defined with respect to the normal sense of flow of the gases within the turbomachine, and comprises a radial flange (16d) interposed between the radial face (2e) of the low pressure rotary assembly (2) and the twinned parts (17) and forming with an axially spaced radial flange (19) of an upstream retaining member (20) a toroidal recess (21) of the said twinned parts (17), the assembly of the saids parts, upstream retaining member, twinned parts (17) and the radial flange (16d) of the said body of revolution (16) being secured by nuts and bolts on the radial face (2e) of the low pressure rotary assembly (2).

4. Inter-shaft bearing assembly of a multi-spool turbomachine according to claim 1, characterized in this that the race housing (114) comprises on its outer diameter a number N' of longitudinal grooves (30) constituting the first grooved element and cooperates with a number N' of elements (31) constituted by a cylindrical base (32) and by a tooth (33) constituting the second grooved element and of which the profile is matched for each one to a groove (30) of the race housing (114), the said elements (31) associated with or being secured by a weld (31a) to the inner diameter of an annular member (102b) itself secured by nuts and bolts on a radial face (2c) of the low pressure rotary assembly (2).

5. Inter-shaft bearing assembly of a multi-spool turbomachine according to claim 4 characterized in that the radially resilient body of revolution (116) radially is welded on the one side on the upstream face (114a) of the race housing (114), upstream being defined with respect to a normal sense of flow of the gases of the turbomachine, and is secured on the other side by nuts and bolts on a radial flange (102e) of the said annular member (102b).

**Patentansprüche**

1. Lager für eine mehrstufige Turbomaschine, in dem eine erste innere Welle (2) und eine zweite äußere Welle (3) drehbar und konzentrisch gelagert sind, wobei die erste Welle (2) den Wellenzapfen des Wellenstrangs der Niederdruckstufe und die zweite Welle (3) den Wellenzapfen des Wellenstrangs der Hochdruckstufe bilden, mit einem Wälzlager (5), dessen Wälzkörper (6) zwischen einem direkt auf der zweiten Welle (3) montierten Innenring (7) und einem in einem von der ersten Welle (2) getragenen Haltering (14 ; 114) montierten Außenring (8) eingesetzt sind, wobei die relative Position der beiden Wellen (2, 3) in Höhe des Lagers umgekehrt ist, die zweite Welle (3) radial innen und der mit ihr zusammenwirkende Teil (2a, 2b) der ersten Welle (2) radial außen liegt ; dadurch gekennzeichnet, daß der genannte Haltering (14 ; 114) an seinem Außendurchmesser ein erstes Nutenelement (15 ; 30) besitzt, das in einer durch Paarung erzielten genauen und spielfreien Justierung mit einem zweiten Nutenelement (18 ; 33) zusammenwirkt, das einem auf der ersten Welle (2) fixierten Zwischenteil (17 ; 31) angehört, und daß der genannte Haltering (14, 114) in axialer Richtung durch ein in radialer Richtung elastisch verformbares Drehteil (16 ; 116) gehalten ist, das mit der ersten Welle (2) derart verbunden ist, daß Verformungen und radiale Ausdehnungen des Niederdruck-Wellenzapfens (2) eine radiale Relativbewegung der Nutenelemente (15, 18 ; 30, 33) erzeugen, ohne eine Bewegung des Außenrings (8) des Wälzlagers oder das Auftreten von radialen Spielen in dem Wälzlager (5) hervorzurufen.

2. Zwischenwellenlager für eine mehrstufige Turbomaschine nach Anspruch 1, dadurch gekennzeichnet, daß der Haltering (14) N in regelmäßigen Abständen angeordnete Zähne (15) aufweist, die das erste Nutenelement bilden und mit N Führungsstücken (17) zusammenwirken, deren zentraler Verbindungsteil eine das zweite Nutenelement bildende Nut (18) umfaßt und dessen Breite an die Breite eines der genannten korrespondierenden Zähne angepaßt ist, wobei die Führungsstücke (17) durch Schrauben und Muttern an einer radialen Stirnseite (2e) des Niederdruck-Wellenzapfens (2) befestigt sind.

3. Zwischenwellenlager für eine mehrstufige Turbomaschine nach Anspruch 2, dadurch gekennzeichnet, daß das in radialer Richtung elastisch verformbare Drehteil (16) die axiale Halterung des Halterings (14) auf der in Bezug die normale Zirkulationsrichtung der Gase in der Turbomaschine stromabwärts gelegenen Seite gewährleistet und einen radialen Flansch (16d) umfaßt, der zwischen der radialen Stirnseite (2e) des Niederdruck-Wellenzapfens (2) und den Führungsstücken (17) liegt und mit einem in axialer Richtung beabstandeten radialen Flansch (19) eines stromaufwärts gelegenen Halteteils (20) eine torusförmige Aufnahme (21) für die Führungsstücke (17) bildet, wobei die aus diesem Halteteil (20), den Führungsstücken (17) und dem radialen Flansch (16d) des Drehteils (16) bestehende Baugruppe durch Schrauben und Muttern an der radialen Stirnseite (2e) des Niederdruck-Wellenzapfens (2) befestigt ist.

4. Zwischenwellenlager für eine mehrstufige Turbomaschine nach Anspruch 1, dadurch gekennzeichnet, daß der Haltering (114) auf seinem Außendurchmesser N' Längsnuten (30) besitzt, die das erste Nutenelement bilden und mit N' Elementen (31) zusammenwirken, die aus einer zylindrischen Basis (32) und einem das zweite Nutenelement bildenden Zahn (33) bestehen, wobei das Profil dieses Zahns jeweils mit einer Nut (30) des Halterings (114) gepaart ist, und daß die genannten Elemente (31) Bestandteile der Innendurchmesserfläche eines Ringes (102b) bilden oder mit diesem durch eine Schweißstelle (31a) verbunden sind, der seinerseits durch Schrauben und Muttern auf einer radialen Stirnseite (2c) des Niederdrucks-Wellenzapfens (2) befestigt ist.

5. Zwischenwellenlager für eine mehrstufige Turbomaschine nach Anspruch 4, dadurch gekennzeichnet, daß das in radialer Richtung elastisch verformbare Drehteil (116) auf der einen Seite mit der in Bezug auf die normale Zirkulationsrichtung der Gase in der Turbomaschine stromaufwärts gelegenen Seite (114a) des Halterings (114) verschweißt und auf der anderen Seite durch Schrauben und Muttern an einer radialen Stirnseite (102e) des genannten Ringes (102b) befestigt ist.

FIG. 1

0 109 874

FIG. 4

FIG. 2

FIG. 3

0 109 874